# NEUE EUROPÄISCHE PATENTSCHRIFT

(11) **EP 2 738 365 B2**
(45) Veröffentlichungstag und Bekanntmachung des Hinweises auf die Entscheidung über den Einspruch: **10.04.2019**
(45) Hinweis auf die Patenterteilung: 30.03.2016
(21) Anmeldenummer: 13180441.1
(22) Anmeldetag: 14.08.2013
(51) Int. Cl.: F01N 3/20, F16K 15/03, B60K 15/04

(54) **Leitungsventil für eine Flüssigkeitsleitung**
Line valve for a fluid line
Soupape de guidage pour une conduite de liquide

(30) Priorität: 29.11.2012 DE 102012111570
(43) Veröffentlichungstag der Anmeldung: 04.06.2014
(73) Patentinhaber: VERITAS AG, 63571 Gelnhausen (DE)
(72) Erfinder: Desch, Christian, 63599 Biebergemünd (DE); Niessner, Heiko, 63619 Bad Orb (DE)
(74) Vertreter: Patentship Patentanwaltsgesellschaft mbH

(56) Entgegenhaltungen:
- EP-A1- 1 332 306
- EP-A1- 1 642 761
- EP-A1- 1 685 999
- EP-A2- 0 863 037
- EP-A2- 1 086 842
- WO-A1-2006/134588
- WO-A1-2012/108119
- WO-A1-2012/114484
- AT-U1- 9 752
- DE-A1- 10 035 721
- DE-B- 1 186 290
- DE-C1- 19 714 813
- DE-U1-202010 001 147
- FR-A1- 2 762 807
- US-A- 3 128 785
- US-A- 5 887 615
- US-A1- 2004 050 372
- US-A1- 2007 272 308
- US-A1- 2009 139 606
- US-A1- 2011 079 322
- US-A1- 2011 240 640
- US-A1- 2012 211 689

## Beschreibung

Die vorliegende Erfindung betrifft ein Leitungsventil für eine Flüssigkeitsleitung, insbesondere in einem Kraftfahrzeug und ein Flüssigkeitstanksystem.

Bei der Betankung eines Tanks mit Flüssigkeit in einem Fahrzeug, wie beispielsweise bei einer Betankung mit einer wässrigen Harnstofflösung, kann es zu einem Zurückschwappen (Spit Back) von Flüssigkeit kommen, so dass die Flüssigkeit aus einem Befüllkopf austritt. Das Zurückschwappen kann durch eine in das Innere eines Flüssigkeitstanks hineinragende Ventilklappe verhindert werden. Bei niedrigen Temperaturen besteht allerdings das Problem, dass sich im Inneren des Flüssigkeitstanks Eisschollen bilden können, die bei einer Bewegung des Fahrzeugs an die Ventilklappe stoßen und diese beschädigen können.

Die Druckschrift EP 1 642 761 A1 betrifft eine Befüllkopfanordnung, die verhindern soll, dass ein Benutzer bleifreies Benzin in einen Dieseltreibstofftank füllt. Die Befüllkopfanordnung weist ein Gehäuse auf. Innerhalb des Gehäuses ist eine drehbar gelagerte Klapptür angeordnet. Die Klapptür wird beim Einführen einer Kraftstoffabgabedüse durch eine Befülldüse der Befüllkopfanordnung in eine Öffnungsposition gedrückt.

Die Druckschrift AT 009 752 U1 betrifft einen Tankstutzen, der eine Außenwand und eine Innenwand aufweist und einen im Betrieb von der Umgebung abgeschlossenen inneren Raum bildet. Eine einwärts zulaufende Führungswand endet in einer Durchtrittsöffnung für ein Füllrohr einer Zapfpistole, wobei die Durchtrittsöffnung von einer Klappe verschlossen ist. Der Tankstutzen umfasst eine weitere Klappe, welche beim Betanken vom Füllrohr der Zapfpistole aufgestoßen wird. Der Tankstutzen umfasst ferner ein Unterdruck-Überdruck-Ventil, welches dem Druckausgleich zwischen dem inneren Raum und der Atmosphäre außerhalb der Außenwand dient.

Die Druckschrift EP 1 086 842 A2 betrifft eine Fülleinrichtung mit einem Gehäuse, das eine obere Öffnung aufweist. Am unteren Ende eines Gehäusehauptkörpers ist ein zweiter Verschluss angeordnet. Eine Befülldüse wird in die obere Öffnung eingeführt und öffnet dabei den ersten Verschluss und den zweiten Verschluss zum Befüllen des Tanks.

Die Druckschrift WO 2012/108119 A1 betrifft einen Befüllkopf, der zwei Ventilkörper umfasst, die durch das Einsetzen einer Befülldüse geöffnet werden können.

Die Druckschrift US 2011/0240640 A1 betrifft einen Befüllkopf, der mit einem Klappventilmechanismus ausgerüstet ist. Der Klappventilmechanismus wird von einer eingesetzten Befülldüse betätigt.

Die Druckschrift US 2009/0139606 A1 betrifft einen kompakten Befüllkopf für einen Kraftstofftank. Der Befüllkopf umfasst einen zylindrischen Innenwandabschnitt, der durch eine drehbar gelagerte Tür verschließbar ist.

Die Druckschrift EP 0 863 037 A2 betrifft einen Verschluss für einen Einfüllstutzen eines Kraftfahrzeugtanks mit einem um eine Schwenkachse verschwenkbaren Verschlussdeckel. Beim Einführen einer Zapfpistole wird der Verschlussdeckel aufgedrückt und verschwenkt.

Die Druckschrift FR 2 762 807 beschreibt eine Füllrohrklappe für einen Benzintank, die an einem oberen Ende eines halbzylindrischen Gehäuses angeordnet ist.

Die Druckschrift WO 2012/114484 A1 betrifft eine Kraftstoffzuführeinheit für einen Benzintank. Die Kraftstoffzuführeinheit weist eine Klappe auf, die durch das Einsetzen einer Befülldüse aufgestoßen wird.

Die Druckschrift US 2011/0079322 A1 betrifft einen Befüllkopf mit einer oberen Tür und einer unteren Tür, die verhindern sollen, dass Flüssigkeit oder Staub durch den Befüllkopf in den Kraftstofftank eintritt.

Die Druckschrift DE 20 2010 001 147 U1 betrifft einen Einfüllstutzen für einen Flüssigkeitstank für Harnstoff oder andere Flüssigkeiten an Kraftfahrzeugen oder stationären Anlagen.

Die Druckschrift US 2007/0272308 A1 betrifft ein Rückschlagventil, welches unter anderem einen Körper, einen Ventilsitz und eine Platte umfasst, wobei die Platte in dem Körper bewegbar angeordnet ist.

Die Druckschrift US 5,887,615 A betrifft ein Rückschlagventil, mit einem Ventilelement, welches eine Abdeckung, eine ringförmige Verpackung und eine Pressplatte umfasst.

Die Druckschrift US 3,128,785 A betrifft ein Rückschlagventil mit einem Körper, welcher eine Einlassöffnung und eine Auslassöffnung aufweist. In dem Körper des Rückschlagventils ist eine Düse angeordnet, wobei an der Düse ein Ventilglied angeordnet ist.

Die Druckschrift DE 1 186 290 B beschreibt ein Gehäuse aus einem rohrförmigen Glaskörper mit einer Rückschlagklappe.

Es ist die der Erfindung zugrundeliegende Aufgabe, eine Beschädigung der Ventilklappe zu verhindern.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch ein Leitungsventil für eine Flüssigkeitsleitung nach Anspruch 1 gelöst, mit einem Gehäuse zum Bilden einer Flüssigkeitskammer, das eine in der Flüssigkeitskammer angeordnete Ventilklappe zum Sperren einer Strömungsrichtung umfasst; und einem Versetzungsabschnitt zum Versetzen der Ventilklappe in Strömungsrichtung in das Innere der Flüssigkeitskammer.

Im Gegensatz zu einem Befüllkopf wird das Leitungsventil zwischen zwei Anschlusstücke einer Flüssigkeitsleitung zu einem Flüssigkeitstank eingesetzt. Durch das in die Flüssigkeitsleitung eingesetzte Leitungsventil wird der Vorteil erreicht, dass auf eine im Flüssigkeitstank angeordnete und in das Innere des Flüssigkeitstanks hineinragende Ventilklappe verzichtet werden kann. Wird als Flüssigkeit eine wässrige Lösung verwendet, wie beispielsweise eine wässrige Harnstofflösung, kann die Ventilklappe im Inneren des Leitungsventils durch sich bewegende Eisschollen nicht beschädigt werden. Trotzdem kann ein Zurückschwappen von Flüssigkeit wirksam verhindert werden. Die Position des Leitungsventils ist durch die Anschlüsse in der Flüssigkeitsleitung außerhalb des Flüssigkeitstanks variabel. Daher ist eine Beschädigung der Ventilklappe durch gefrorenes Additiv bei Schwappbewegungen im Flüssigkeitstank unmöglich.

Zudem sollte das Leitungsventil derart gestaltet sein, dass zum einen ein schnelles Befüllen des Tanks ermöglicht wird, ohne dass Flüssigkeit in der Leitung zurückbleibt und zum anderen ein rasches Schließen der Leitungsklappe selbst bei Schaumbildung sichergestellt wird. Dies wird durch den Versetzungsabschnitt erreicht, durch den die Lage und Position der Ventilklappe im Inneren der Flüssigkeitskammer strömungstechnisch an einen zu diesem Zweck besonders geeigneten Ort verlagert wird. Das Leitungsventil schließt durch die geänderten Druck- und Strömungsbedingungen am Ort der versetzen Ventilklappe in der Flüssigkeitskammer besser und ein Austreten von Flüssigkeit wird wirksam verhindert. Zudem wirkt die Flüssigkeitskammer als Druck- und Flüssigkeitspuffer.

Erfindungsgemäß umfasst das Gehäuse ein erstes Gehäuseteil mit dem Versetzungsabschnitt und ein zweites Gehäuseteil zum Umgeben der Ventilklappe. Dadurch wird beispielsweise der technische Vorteil erreicht, dass sich das Gehäuse auf einfache Weise durch Formteile bilden lässt.

In einer weiteren vorteilhaften Ausführungsform des Leitungsventils wird der Versetzungsabschnitt durch einen zylindrischen Rohrabschnitt gebildet, der sich in das Innere des Gehäuses erstreckt. Dadurch wird beispielsweise der technische Vorteil erreicht, dass im Inneren des zylindrischen Rohrabschnitts eine laminare Strömung beim Einfüllen der Flüssigkeit entsteht und sich die Ventilklappe allein schon aufgrund der trägen Masse der Flüssigkeit öffnet.

Erfindungsgemäß bildet der Versetzungsabschnitt mit dem Gehäuse ein den Versetzungsabschnitt umgebendes Flüssigkeitsreservoir. Dadurch wird beispielsweise der technische Vorteil erreicht, dass ein Druck- und Flüssigkeitsreservoir gebildet wird, in dem sich die Flüssigkeit staut und ein Austreten der Flüssigkeit wirksam verhindert wird. Durch den größeren Querschnitt des Gehäuses gegenüber der Flüssigkeitsleitung wird eine Geschwindigkeitsverringerung der aufsteigenden Flüssigkeit erzielt.

In einer weiteren vorteilhaften Ausführungsform des Leitungsventils ist die Ventilklappe am Ende des Versetzungsabschnitts drehbar gelagert. Dadurch wird beispielsweise der technische Vorteil erreicht, dass sich die Ventilklappe auf einfache Weise öffnen und schließen lässt.

In einer weiteren vorteilhaften Ausführungsform des Leitungsventils umfasst der Versetzungsabschnitt eine ovale Lageröffnung zum drehbaren Lagem der Ventilklappe. Dadurch wird beispielsweise der technische Vorteil erreicht, dass ein Verklemmen der Ventilklappe verhindert wird und die Ventilklappe besser abdichtet.

Erfindungsgemäß umfasst die Ventilklappe ein ringscheibenförmiges Dichtelement. Dadurch wird beispielsweise der technische Vorteil erreicht, dass sich die Dichtwirkung der Ventilklappe verbessert.

Erfindungsgemäß umfasst das ringscheibenförmige Dichtelement eine an der Außenseite umlaufende Vertiefung. Dadurch wird beispielsweise der technische Vorteil erreicht, dass eine besonders leichtgängige Ventilklappe realisiert wird und sich bei einem Stauchen des äußeren Randes des Dichtelements Verunreinigungen, wie beispielsweise Kristalle, von dem Dichtelement ablösen. Zudem wird durch die Vertiefung eine sich mit geringer Kraft anschmiegende und toleranzausgleichende Dichtung realisiert.

In einer weiteren vorteilhaften Ausführungsform des Leitungsventils umfasst die Ventilklappe eine in Strömungsrichtung konvexe Auswölbung zum Ableiten von Flüssigkeit von der Ventilklappe. Dadurch wird beispielsweise der technische Vorteil erreicht, dass eine Ansammlung von Flüssigkeit auf der Ventilklappe verhindert werden kann. Bei Verwendung des Leitungsventils mit einer wässrigen Flüssigkeit, wie beispielsweise einer wässrigen Harnstofflösung, kann so das Einfrieren des Leitungsventils bei niedrigen Temperaturen verhindert werden.

In einer weiteren vorteilhaften Ausführungsform des Leitungsventils umfasst die Ventilklappe eine ovale Lageröffnung zum drehbaren Lagern der Ventilklappe. Dadurch wird beispielsweise ebenfalls der technische Vorteil erreicht, dass ein Verklemmen der Ventilklappe verhindert wird und die Ventilklappe besser abdichtet.

Erfindungsgemäß umfasst das Gehäuse einen ersten Anschlussstutzen und einen zweiten Anschlussstutzen zum Aufstecken einer Flüssigkeitsleitung. Dadurch wird beispielsweise der technische Vorteil erreicht, dass das Leitungsventil auf einfache Weise montiert werden kann.

Erfindungsgemäß ist der erste Anschlussstutzen gegenüber dem Gehäuse und/oder der zweite Anschlussstutzen gegenüber dem Gehäuse abgewinkelt. Dadurch wird beispielsweise der technische Vorteil erreicht, dass eine raumsparende Anordnung des Flüssigkeitsventils erreicht werden kann.

In einer weiteren vorteilhaften Ausführungsform des Leitungsventils umfasst der erste Anschlussstutzen und/oder der zweite Anschlussstutzen einen senkrecht zu einer Aufsteckrichtung verlaufenden Aufsteckanschlag. Dadurch wird beispielsweise der technische Vorteil erreicht, dass Verwindungen oder Spannungsbelastungen der Flüssigkeitsleitung vermieden werden.

In einer weiteren vorteilhaften Ausführungsform des Leitungsventils umfasst das Leitungsventil einen Splint zum drehbaren Befestigen derVentilklappe an dem Versetzungsabschnitt. Dadurch wird beispielsweise der technische Vorteil erreicht, dass die Ventilklappe auf einfache Weise befestigt werden kann.

In einer weiteren vorteilhaften Ausführungsform des Leitungsventils ist die Ventilklappe auf den Versetzungsabschnitt aufgerastet. Dadurch wird beispielsweise der technische Vorteil erreicht, dass sich das Leitungsventil auf einfache Weise zusammensetzen lässt. Ausführungsbeispiele der Erfindung sind in den Zeichnungen dargestellt und werden im Folgenden näher beschrieben.

Gemäß einem zweiten Aspekt der Erfindung wird die Aufgabe durch ein Flüssigkeitstanksystem gelöst, mit einem Flüssigkeitstank zum Aufnehmen einer Flüssigkeit; einem Leitungsventil nach dem ersten Aspekt und einer Flüssigkeitsleitung zwischen dem Flüssigkeitstank und dem Leitungsventil.

Dadurch wird der Vorteil erreicht, dass das Leitungsventil außerhalb des Flüssigkeitstanks angeordnet ist und die Ventilklappe nicht durch gefrorenes Additiv bei Schwappbewegungen im Flüssigkeitstank beschädigt werden kann.

Es zeigen:
- Fig. 1: eine perspektivische Ansicht eines Leitungsventils;
- Fig. 2: eine Explosionsdarstellung des Leitungsventils;
- Fig. 3: eine Querschnittsansicht des Leitungsventils;
- Fig. 4: eine Querschnittsansicht des Leitungsventils;
- Fig. 5: eine Querschnittsansicht durch ein Gehäuseteil mit einem Versetzungsabschnitt und einer Ventilklappe;
- Fig. 6: eine vergrößerte Ansicht der Ventilklappe;
- Fig. 7: eine Querschnittsansicht durch einen Versetzungsabschnitt;
- Fig. 8: eine Explosionsansicht eines weiteren Leitungsventils;
- Fig. 9: eine Querschnittsexplosionsansicht des weiteren Leitungsventils; und
- Fig. 10: eine weitere Querschnittsansicht des weiteren Leitungsventils.

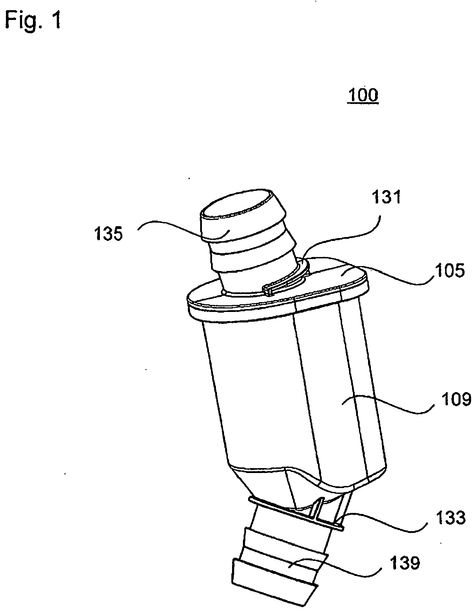

Fig. 1 zeigt eine perspektivische Ansicht eines Leitungsventils 100. Das Leitungsventil 100 wird in eine Flüssigkeitsleitung zu einem Flüssigkeitstank in einem Kraftfahrzeug eingesetzt und verhindert ein unbeabsichtigtes Austreten von Flüssigkeit, indem es eine Strömungsrichtung in der Flüssigkeitsleitung sperrt.

Der Flüssigkeitstank ist beispielsweise ein Tank für eine wässrige Harnstofflösung (SCR-Tank). Die wässrige Harnstofflösung dient zu einer selektiven katalytischen Reduktion (Selective Catalytic Reduction - SCR) zur Reduktion von Stickoxiden in Abgasen von Kraftfahrzeugen. Die chemische Reaktion am SCR-Katalysator ist selektiv, so dass bevorzugt die Stickoxide (NO, NO2) reduziert werden, während unerwünschte Nebenreaktionen weitgehend unterdrückt werden.

Das Leitungsventil 100 umfasst ein Gehäuse mit einem oberen Gehäuseteil 105 und einem unteren Gehäuseteil 109. Im Inneren des Gehäuses ist ein Hohlraum gebildet, der eine Ventilklappe umfasst und der eine abgedichtete Flüssigkeitskammer bildet. Das obere Gehäuseteil 105 und das untere Gehäuseteil 109 können zu diesem Zweck miteinander verschweißt sein. Das obere und das untere Gehäuseteil 105 und 109 sind beispielsweise Kunststoffformteile, die im Spritzgussverfahren hergestellt sind. Die Gehäuseteile 105 können aus einem thermoplastischen Kunststoff gebildet sein, wie beispielsweise Polyamide, Polyoximethylen, Polyolefine und thermoplastische-Elastomere.

Sowohl das obere Gehäuseteil 105 als auch das untere Gehäuseteil 109 umfassen einen Anschlussstutzen 135 oder 139. Die Anschlussstutzen 135 und 139 dienen zum Aufstecken einer Flüssigkeitsleitung auf das Leitungsventil 100. Das Leitungsventil 100 kann auf diese Weise in eine Flüssigkeitsleitung integriert werden. Die Anschlussstutzen 135 und 139 weisen umlaufende keilförmige Ringabschnitte auf, die ein Abrutschen der aufgesteckten Flüssigkeitsleitungen verhindern.

Damit die aufgesteckten Flüssigkeitsleitungen gerade auf den abgewinkelten Anschlussstutzen 135 und 139 sitzen, sind in den Anschlussstutzen 135 und 139 senkrecht zu einer Aufsteckrichtung verlaufende Aufsteckanschläge 131, 133 gebildet. An den Aufsteckanschläge 131, 133 stoßen die Flüssigkeitsleitungen beim Aufstecken an. Die Anschlussstutzen 135 und 139 sind gegenüber dem Gehäuse 105 und 109 abgewinkelt, so dass ein raumsparender Einbau des Leitungsventils 100 in dem Kraftfahrzeug ermöglicht wird.

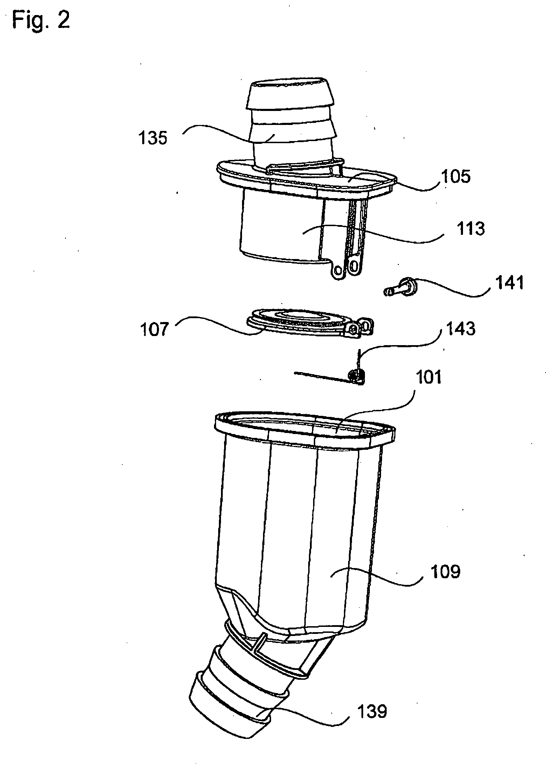

Fig. 2 zeigt eine Explosionsdarstellung des Leitungsventils 100. Im Inneren des Gehäuses 105 und 109 ist eine Flüssigkeitskammer 111 gebildet, in der sich die rückströmende Flüssigkeit sammelt und die Druckspitzen in der Flüssigkeitsleitung ausgleicht. Die Ventilklappe 107 öffnet sich in die Flüssigkeitskammer 111 hinein. Am oberen Gehäuseteil 105 ist ein Versetzungsabschnitt 113 angeordnet, der sich in das Innere der Flüssigkeitskammer 111 erstreckt und den Anschlussstutzen 135 nach Innen hin fortsetzt. Der Versetzungsabschnitt 113 wird durch einen rohrförmigen Abschnitt gebildet, in dem ein Flüssigkeitskanal zu der Ventilklappe 107 verläuft.

Am Ende des Versetzungsabschnittes 113 ist die Ventilklappe 107 an einem Scharnier drehbar gelagert. Die Ventilklappe 107 öffnet sich in die Flüssigkeitskammer 111 hinein und liegt in geschlossenem Zustand auf dem Versetzungsabschnitt 113 auf. Durch die Versetzung der Ventilklappe 107 in das Innere der Flüssigkeitskammer 111 hinein, lassen sich bessere Schließergebnisse erreichen, so dass ein Austreten von Flüssigkeit wirksam verhindert wird.

Zu diesem Zweck ist die Ventilklappe 107 mittels eines Splints 141 an dem Versetzungsabschnitt 113 drehbar im Inneren der Flüssigkeitskammer 111 gelagert. Eine Schenkelfeder 143 bewirkt, dass sich die Ventilklappe 107 automatisch schließt. Die Schenkelfeder 143 sorgt beispielsweise dafür, dass sich Ventilklappe 107 schon dann öffnet, wenn ein Gewicht von 30 g auf dieser lastet. Lastet kein Gewicht auf der Ventilklappe 107 wird die Ventilklappe 107 auf den Rand des Versetzungsabschnittes 113 gedrückt. Durch eine geringe Öffnungskraft der Ventilklappe werden ein geringer Einfüllwiderstand und ein geringer Rückstau der Flüssigkeit in der Flüssigkeitsleitung erreicht. Daneben wird eine zu frühe Abschaltung einer Zapfventilautomatik beim Betanken verhindert.

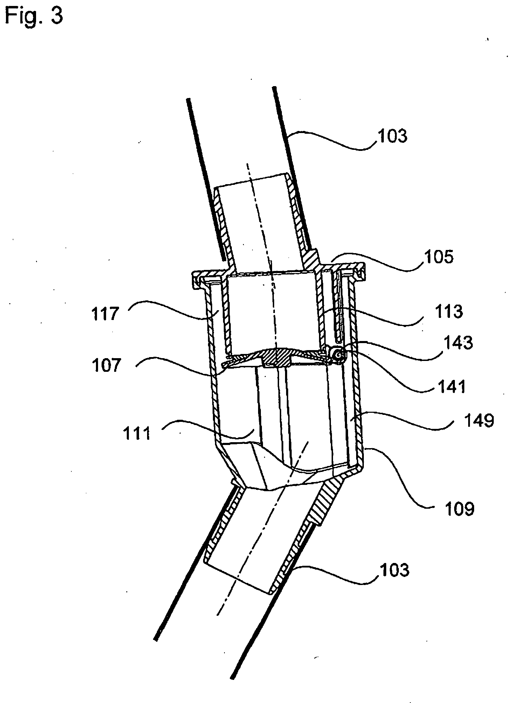

Fig. 3 zeigt eine Querschnittsansicht des Leitungsventils 100 mit aufgesteckter Flüssigkeitsleitung 103. Das Gehäuseteil 105 und 109 bildet die Flüssigkeitskammer 111, in der sich die in das Innere der Flüssigkeitskammer 111 versetzte Ventilklappe 107 befindet. Das obere Gehäuseteil 105 umfasst den Versetzungsabschnitt 113 zum Versetzen der Ventilklappe 107 und das untere Gehäuseteil 109 umgibt die Ventilklappe 107. Um den Versetzungsabschnitt 113 herum, ist ein den Versetzungsabschnitt 113 umgebendes Flüssigkeitsreservoir 117 gebildet. Der Versetzungsabschnitt 113 ist durch einen zylindrischen Rohrabschnitt 115 gebildet, der sich von einer Wand des oberen Gehäuseteils 105 in das Innere der Flüssigkeitskammer 111 erstreckt.

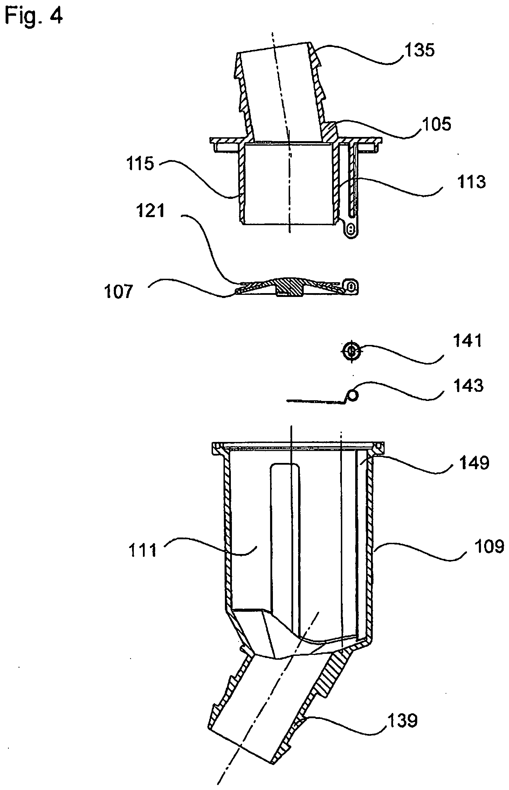

Fig. 4 zeigt eine Querschnittsexplosionsansicht des Leitungsventils 100. Die Ventilklappe 107 umfasst ein im Querschnitt V-förmiges Dichtelement 121, das bei geschlossener Ventilklappe 107 das Leitungsventil 100 entgegen einer Durchlassrichtung abdichtet. Ein Schenkel des im Querschnitt v-förmigen Dichtelementes 121 liegt auf der Ventilkappe 107 auf, der andere Schenkel des im Querschnitt v-förmigen Dichtelementes 121 liegt im geschlossenen Zustand auf einem Rand des Versetzungsabschnittes 113 auf. Das Dichtelement 121 läuft ringförmig auf der Ventilkappe 107 um. Das Dichtelement 121 kann beispielsweise aus Silikon, thermoplastischen Elastomeren oder Gummi gebildet sein.

Im Inneren der Flüssigkeitskammer 111 ist in dem Gehäuseteil 109 eine seitliche Sicherungsrippe oder ein Sicherungssteg 149 zur Sicherung des Splints 141 gebildet. Diese Sicherungsrippe 149 verhindert bei zusammengesetzten Gehäuseteilen 105 und 109 ein seitliches Herausrutschen des Splints 141.

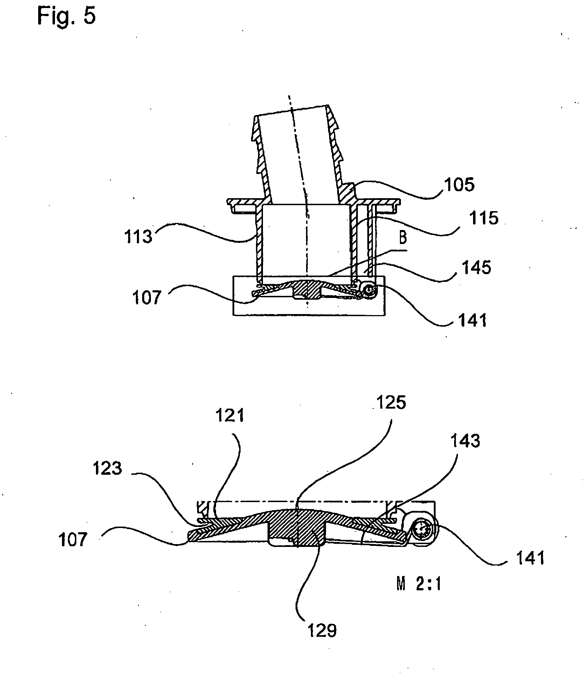

Fig. 5 zeigt eine Querschnittsansicht durch das obere Gehäuseteil 105 mit dem Versetzungsabschnitt 113 und der Ventilklappe 107 und eine vergrößerte Querschnittsansicht durch die Ventilklappe 107. Der Versetzungsabschnitt 113 umfasst einen seitlich herausstehenden Lagerabschnitt 145, der als Basis zum drehbaren Lagern der Ventilklappe 107 dient. Zusätzlich stabilisiert der Lagerabschnitt 145 den Versetzungsabschnitt 113 an dem Gehäuseteil 105.

Die Ventilklappe 107 weist eine in Strömungsrichtung konvexe Auswölbung 125 zum Ableiten von Flüssigkeit von der Ventilklappe 107 auf. Auf der gegenüber liegenden Seite der Ventilklappe 107 ist mittig ein herausragender Auflageabschnitt 129 gebildet, über den die Schenkelfeder 143 einen Schließdruck auf die Ventilklappe 107 ausübt und der einen Schenkel der Schenkelfeder 143 aufnimmt.

Das im Querschnitt v-förmige Dichtelement 121 weist an seiner Außenseite eine umlaufende Vertiefung 123 auf. Beim Schließen der Ventilklappe 107 wird die Vertiefung 123 durch den Rand des Versetzungsabschnittes 113 zusammengedrückt. Dadurch lösen sich Verunreinigungen oder Hamstoffkristalle am Rand des Dichtelements 121 und eine Dichtwirkung der Ventilklappe 107 wird verbessert. Außerdem wird beim Zusammendrücken der Vertiefung 123 die Oberfläche des Dichtelementes 121 geneigt, so dass auch im Bereich des Dichtelementes 121 die Flüssigkeit besser abfließen kann.

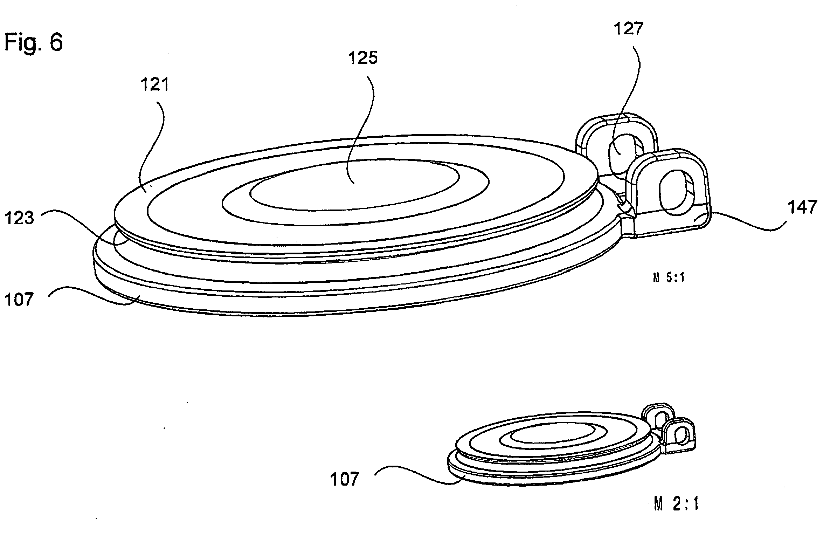

Fig. 6 zeigt eine vergrößerte Ansicht der Ventilklappe 107. Seitlich an der tellerförmigen Ventilklappe 107 ist ein herausstehender Lagerabschnitt 147 angeordnet, der zwei ovale Lageröffnungen 127 umfasst. Der Lagerabschnitt 147 ist einstückig an der tellerförmigen Ventilklappe 107 gebildet.

Die ovalen Lageröffnungen 127 nehmen den Splint 141 derart auf, dass der Splint 141 in den Lageröffnungen 147 ein bestimmtes Spiel aufweist. Das Spiel ermöglicht einen Bewegungsfreiraum, in dem sich die Ventilklappe 107 nach der Montage gegenüber dem Versetzungsabschnitt 113 frei bewegen lässt und sich planparallel an dem Versetzungsabschnitt 113 anlegt. Daher ist keine Deformation der Dichtung notwendig und es können geringere Schließkräfte realisiert werden.

Dadurch wird ein Verklemmen der Ventilklappe 107 verhindert und die Ventilklappe 107 liegt besser an dem Rand des Versetzungsabschnittes 113 an. Eine Dichtwirkung wird erhöht und ein Verschleiß des Dichtelementes 121 verringert. Die Auswölbung 125 befindet sich in der Mitte der kreisförmigen Ventilklappe 107.

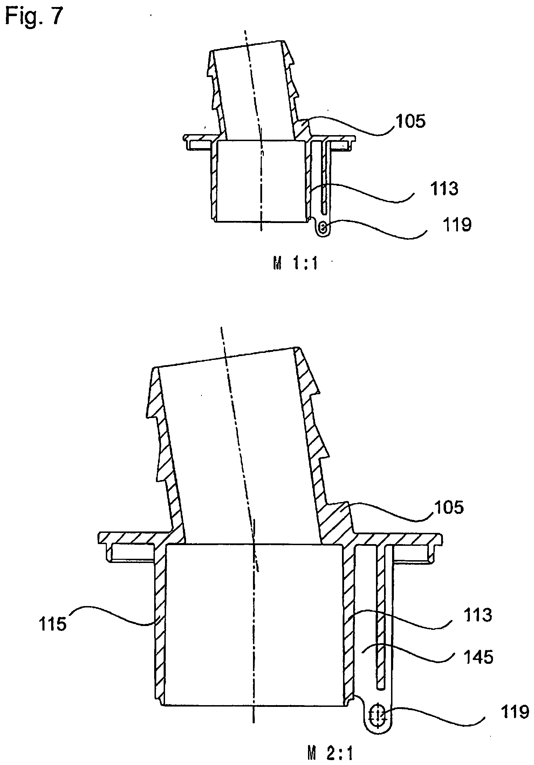

Fig. 7 zeigt eine Querschnittsansicht durch das obere Gehäuseteil 105 mit dem Versetzungsabschnitt 113. Der rohrförmige Versetzungsabschnitt 113 umfasst den seitlichen Lagerabschnitt 145, der ebenfalls zwei ovale und parallel angeordnete Lageröffnungen 119 umfasst, durch die der Splint 141 zum drehbaren Lagern der Ventilklappe 107 hindurchgeführt wird. In den Lageröffnungen 119 weist der Splint ebenfalls ein Spiel auf. Durch die ovalen Lageröffnungen 119 im Lagerabschnitt 145 wird daher zusätzlich ein Verklemmen verhindert und ein Sitz der Ventilklappe 107 zusätzlich verbessert.

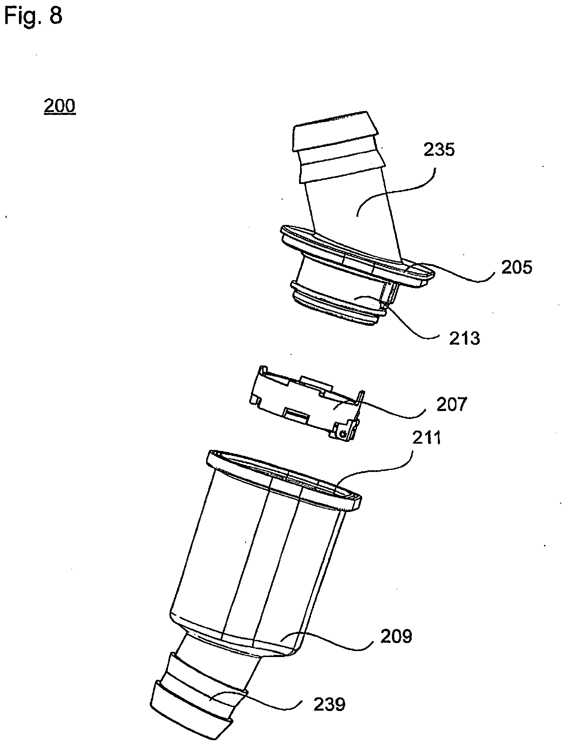

Fig. 8 zeigt eine Explosionsansicht eines weiteren Leitungsventils 200. Das Leitungsventil 200 umfasst ein oberes Gehäuseteil 205 mit einem Anschlussstutzen 235 und ein unteres Gehäuseteil 209 mit einem Anschlussstutzen 239, die zusammengesetzt eine Flüssigkeitskammer 211 bilden. Ausgehend von dem oberen Gehäuseteil 205 erstreckt sich der Versetzungsabschnitt 213 in das Innere der Flüssigkeitskammer 211.

In Gegensatz zur ersten Ausführungsform ist eine vollständige Ventilklappenanordnung 207 auf den Versetzungsabschnitt 213 aufgesteckt. Die Ventilklappenanordnung 207 umfasst eine drehbare Ventilklappe und ein die Ventilklappe umgebendes ringförmiges Lagerformteil zum Aufstecken auf den Versetzungsabschnitt 213.

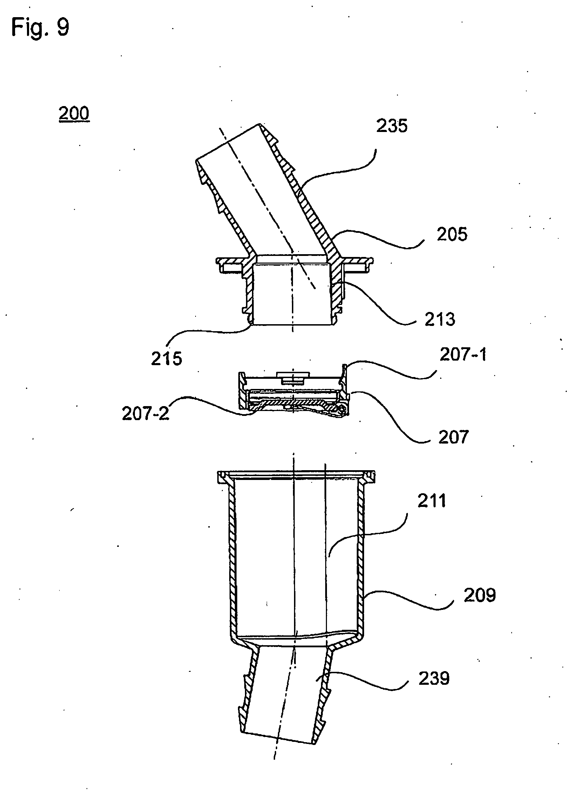

Fig. 9 zeigt eine Querschnittsexplosionsansicht des Leitungsventils 200. Der Versetzungsabschnitt 213 umfasst einen umlaufenden Rastabschnitt 215, auf den das ringförmige Lagerformteil 207-1 mit der drehbar gelagerten Ventilklappe 207-2 aufsteckbar ist. Die Ventilklappe 207-2 ist ebenfalls mit einer Federspannung beaufschlagt, so dass sich die unbelastete Ventilklappenanordnung 207 in einem geschlossenen Zustand befindet. Dadurch kann eine modulare Montage des Leitungsventils 200 erreicht werden.

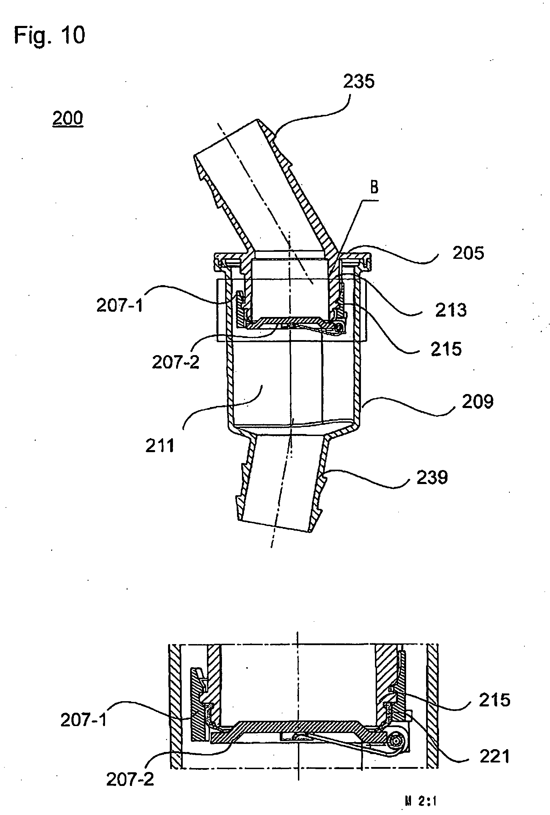

Fig. 10 zeigt weitere Querschnittsansichten des Leitungsventils 200 in zusammengesetztem Zustand. Das Lagerformteil 207-1 der Ventilklappenanordnung 207 ist auf dem Rastabschnitt 215 des Versetzungsabschnitts 213 eingerastet. Das umlaufende Dichtelement 221 zum Abdichten der Ventilklappe 207-2 ist zwischen dem Rastabschnitt 215 und dem Lagerformteil 207-1 eingesetzt und weist einen umlaufenden Federabschnitt auf, der in einen entsprechenden Nutabschnitt in dem Versetzungsabschnitt 113 eingesetzt ist.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben.

### BEZUGSZEICHENLISTE

- 100: Leitungsventil
- 103: Flüssigkeitsleitung
- 105: Gehäuseteil
- 107: Ventilklappe
- 109: Gehäuseteil
- 111: Flüssigkeitskammer
- 113: Versetzungsabschnitt
- 115: Rohrabschnitt
- 117: Flüssigkeitsreservoir
- 119: Lageröffnung
- 121: Dichtelement
- 123: Vertiefung
- 125: Auswölbung
- 127: Lageröffnung
- 129: Auflageabschnitt
- 131: Aufsteckanschlag
- 133: Aufsteckanschlag
- 135: Anschlussstutzen
- 139: Anschlussstutzen
- 141: Splint
- 143: Schenkelfeder
- 145: Lagerabschnitt
- 147: Lagerabschnitt
- 149: Sicherungsrippe
- 200: Leitungsventil
- 205: Gehäuseteil
- 207: Ventilklappe
- 207-1: Lagerformteil
- 207-2: Ventilklappe
- 209: Gehäuseteil
- 211: Flüssigkeitskammer
- 213: Versetzungsabschnitt
- 215: Rastabschnitt
- 221: Dichtelement
- 235: Anschlussstutzen
- 239: Anschlussstutzen

## Patentansprüche

1. Leitungsventil (100) für eine Flüssigkeitsleitung (103), mit:
einem Gehäuse (105, 109) zum Bilden einer Flüssigkeitskammer (111), das eine in der Flüssigkeitskammer angeordnete Ventilklappe (107) zum Sperren einer Strömungsrichtung, einen ersten Anschlussstutzen (135) und einen zweiten Anschlussstutzen (139) zum Aufstecken einer Flüssigkeitsleitung (103) umfasst; und
einem Versetzungsabschnitt (113) zum Versetzen der Ventilklappe (107) in Strömungsrichtung in das Innere der Flüssigkeitskammer (111), der den ersten Anschlussstutzen (135) nach Innen hin fortsetzt und der mit dem Gehäuse (109) ein den Versetzungsabschnitt (113) umgebendes Flüssigkeitsreservoir (117) bildet, wobei das Gehäuse (105, 109) ein erstes Gehäuseteil (105) mit dem Versetzungsabschnitt (113) und ein zweites Gehäuseteil (109) zum Umgeben der Ventilklappe (107) umfasst, wobei der erste Anschlussstutzen (135) Teil des ersten Gehäuseteils (105) ist, wobei der zweite Anschlussstutzen (139) Teil des zweiten Gehäuseteils (109) ist,
wobei die Ventilklappe (107) ein ringscheibenförmiges Dichtelement (121) umfasst, welches als ein im Querschnitt V-förmiges Dichtelement (121) ausgebildet ist, und welches bei einer geschlossenen Ventilklappe (107) das Leitungsventil (100) entgegen einer Durchlassrichtung abdichtet,
wobei ein Schenkel des Dichtelements (121) auf der Ventilklappe (107) aufliegt, und wobei ein anderer Schenkel des Dichtelements (121) im geschlossenen Zustand auf einem Rand des Versetzungsabschnitts (113) aufliegt,
wobei das Dichtelement (121) ringförmig auf der Ventilklappe (107) umläuft,
wobei das ringscheibenförmige Dichtelement (121) eine an der Außenseite umlaufende Vertiefung (123) umfasst, und
wobei der erste Anschlussstutzen (135) gegenüber dem Gehäuse (105, 109) und/oder der zweite Anschlussstutzen (139) gegenüber dem Gehäuse (105, 109) abgewinkelt ist.

2. Leitungsventil (100) nach einem der vorangehenden Ansprüche, wobei der Versetzungsabschnitt (113) durch einen zylindrischen Rohrabschnitt (115) gebildet wird, der sich in das Innere des Gehäuses (105, 109) erstreckt.

3. Leitungsventil (100) nach einem der vorangehenden Ansprüche, wobei die Ventilklappe (107) am Ende des Versetzungsabschnitts (113) drehbar gelagert ist.

4. Leitungsventil (100) nach einem der vorangehenden Ansprüche, wobei der Versetzungsabschnitt (113) eine ovale Lageröffnung (119) zum drehbaren Lagern der Ventilklappe (107) umfasst.

5. Leitungsventil (100) nach einem der vorangehenden Ansprüche, wobei die Ventilklappe (107) eine in Strömungsrichtung konvexe Auswölbung (125) zum Ableiten von Flüssigkeit von der Ventilklappe (107) umfasst.

6. Leitungsventil (100) nach einem der vorangehenden Ansprüche, wobei die Ventilklappe (107) eine ovale Lageröffnung (127) zum drehbaren Lagern der Ventilklappe (107) umfasst.

7. Leitungsventil (100) nach Anspruch 1, wobei der erste Anschlussstutzen (135) und/oder der zweite Anschlussstutzen (139) einen senkrecht zu einer Aufsteckrichtung verlaufenden Aufsteckanschlag (131, 133) umfasst.

8. Leitungsventil (200) nach einem der vorangehenden Ansprüche, wobei die Ventilklappe (207) auf dem Versetzungsabschnitt (213) aufgerastet ist.

9. Flüssigkeitstanksystem, mit:
einem Flüssigkeitstank zum Aufnehmen einer Flüssigkeit;
einem Leitungsventil (100) nach einem der Ansprüche 1 bis 8; und
einer Flüssigkeitsleitung (103) zwischen dem Flüssigkeitstank und dem Leitungsventil (100).

## Claims

1. Line valve (100) for a liquid line (103), with:
a housing (105, 109) for forming a liquid chamber (111), which comprises a valve flap (107) arranged in the liquid chamber for blocking a flow direction, a first connection nozzle (135) and a second connection nozzle (139) for attaching a liquid line (103); and
an offset portion (113) for moving the valve flap (107) in flow direction into the interior of the liquid chamber (111), which offset portion (113) continues the first connection nozzle (135) to the interior and together with the housing (109) forms a liquid reservoir (117), which surrounds the offset portion (113), wherein the housing (105, 109) comprises a first housing part (105) with the offset portion (113) and a second housing part (109) for enclosing the valve flap (107), wherein the first connection nozzle (135) is part of the first housing part (105), wherein the second connection nozzle (139) is part of the second housing part (109),
wherein the valve flap (107) comprises an annular disc-shaped sealing element (121) which is configured as a cross-sectionally V-shaped sealing element (121), and which in the case of a closed valve flap (107) seals the line valve (100) counter to a passing-through direction,
wherein one leg of the sealing element (121) lies on the valve flap (107), and wherein another leg of the sealing element (121) in the closed state lies on a periphery of the offset portion (113),
wherein the sealing element (121) runs around annularly on the valve flap (107),
wherein the annular disc-shaped sealing element (121) comprises a recess (123), which runs around the exterior of said element (121), and
wherein the first connection nozzle (135) is bent in respect to the housing (105, 109) and/or the second connection nozzle (139) is bent in respect to the housing (105, 109).

2. Line valve (100) according to any of the preceding claims, wherein the offset portion (113) is formed by a cylindrical pipe section (115), which extends into the interior of the housing (105, 109).

3. Line valve (100) according to any of the preceding claims, wherein the valve flap (107) is rotatably mounted at the end of the offset portion (113).

4. Line valve (100) according to any of the preceding claims, wherein the offset portion (113) comprises an oval bearing opening (119) for rotatably mounting the valve flap (107).

5. Line valve (100) according to any of the preceding claims, wherein the valve flap (107) comprises a bulge (125), which is convex in flow direction, for diverting liquid from the valve flap (107).

6. Line valve (100) according to any of the preceding claims, wherein the valve flap (107) comprises an oval bearing opening (127) for rotatably mounting the valve flap (107).

7. Line valve (100) according to claim 1, wherein the first connection nozzle (135) und/or the second connection nozzle (139) comprises a slip-stopper (131, 133), which runs vertical to the mounting direction.

8. Line valve (200) according to any of the preceding claims, wherein the valve flap (207) is latched on the offset portion (213).

9. Liquid fueling system, with:
a liquid tank for taking up liquid;
a line valve (100) according to any one of claims 1 to 8; and
a liquid line (103) between the liquid tank and line valve (100).

## Revendications

1. Soupape de conduite (100) pour un conduit de liquide (103) comportant:
un boîtier (105, 109) pour former une chambre de liquide (111), qui comprend un clapet de soupape (107) situé dans la chambre de liquide pour bloquer une direction d'écoulement, un premier raccord (135) et un deuxième raccord (139) pour monter un conduit de liquide (103); et
une section de déplacement (113) pour déplacer le clapet de soupape (107) dans la direction d'écoulement vers l'intérieur de la chambre de liquide (111), qui prolonge le premier raccord (135) vers l'intérieur et qui, avec le boîtier (109), forme un réservoir de liquide (117) entourant la section de déplacement (113), le boîtier (105, 109) comprenant une première partie du boîtier (105) avec la section de déplacement (113) et une deuxième partie du boîtier (109) pour entourer le clapet de soupape (107), le premier raccord (135) faisant partie de la première partie du boîtier (105), et le deuxième raccord (139) faisant partie de la deuxième partie du boîtier (109), le clapet de soupape (107) comprenant un élément d'étanchéité (121) ayant la forme d'un disque annulaire, qui est réalisé sous forme d'élément d'étanchéité de section transversale en forme de V (121), et qui étanchéifie la soupape de conduite (100) dans la direction opposée à la direction de passage lorsque le clapet de soupape (107) est fermé, une branche de l'élément d'étanchéité (121) reposant sur le clapet de soupape (107), et une autre branche de l'élément d'étanchéité (121) reposant dans l'état fermé sur un bord de la section de déplacement (113), l'élément d'étanchéité (121), s'étendant sous forme annulaire sur la périphérie du clapet de soupape (107), l'élément d'étanchéité (121) ayant la forme d'un disque annulaire comprenant une cavité (123) autour de la partie externe, le premier raccord (135) faisant un angle par rapport au boîtier (105, 109) et/ou le deuxième raccord (139) faisant un angle par rapport au boîtier (105, 109).

2. Soupape de conduite (100) selon l'une des revendications précédentes, la section de déplacement (113) étant constituée par une partie de tuyau cylindrique (115), qui s'étend à l'intérieur du boîtier (105, 109).

3. Soupape de conduite (100) selon l'une des revendications précédentes, le clapet de soupape (107) étant monté d'une façon rotative au bout de la section de déplacement (113).

4. Soupape de conduite (100) selon l'une des revendications précédentes, la section de déplacement (113) comprenant une ouverture de support ovale (119) pour le support rotatif du clapet de soupape (107).

5. Soupape de conduite (100) selon l'une des revendications précédentes, le clapet de soupape (107) comprenant un bombement convexe (125) dans la direction d'écoulement pour l'évacuation de liquide du clapet de soupape (107).

6. Soupape de conduite (100) selon l'une des revendications précédentes, le clapet de soupape (107) comprenant une ouverture de support ovale (127) pour le support rotatif du clapet de soupape (107).

7. Soupape de conduite (100) selon la revendication 1, le premier raccord (135) et/ou le deuxième raccord (139) comprenant une butée d'enfichage (131, 133) s'étendant perpendiculairement à une direction d'enfichage.

8. Soupape de conduite (200) selon l'une des revendications précédentes, le clapet de soupape (207) étant encliqueté sur la section de déplacement (213).

9. Système de réservoir de liquide comportant :
un réservoir de liquide destiné à contenir un liquide ;
une soupape de conduite (100) selon l'une des revendications 1 à 8 ; et
un conduit de liquide (103) entre le réservoir de liquide et la soupape de conduite (100).
